# EUROPÄISCHE PATENTSCHRIFT

(11) **EP 1 458 938 B1**
(45) Veröffentlichungstag und Bekanntmachung des Hinweises auf die Patenterteilung: **19.09.2018**
(21) Anmeldenummer: 02774151.1
(22) Anmeldetag: 27.09.2002
(51) Int. Cl.: E02F 3/627

(54) **FRONTLADER MIT EINER AUTOMATISCHEN KUPPLUNGSVORRICHTUNG**
FRONT-END LOADER COMPRISING AN AUTOMATIC COUPLING DEVICE
CHARGEUR FRONTAL A DISPOSITIF D'ACCOUPLEMENT AUTOMATIQUE

(30) Priorität: 28.09.2001 AT 15402001
(43) Veröffentlichungstag der Anmeldung: 22.09.2004
(73) Patentinhaber: Pühringer, Josef, 4523 Neuzeug (AT)
(72) Erfinder: Pühringer, Josef, 4523 Neuzeug (AT)
(74) Vertreter: Patentanwaltskanzlei Hübscher
(86) Internationale Anmeldenummer: PCT/AT2002/000283
(87) Internationale Veröffentlichungsnummer: WO 2003/029567

(56) Entgegenhaltungen:
- EP-A- 0 758 552
- FR-A- 2 684 120
- FR-A- 2 745 043
- US-A- 4 738 463
- US-A- 5 362 108

## Beschreibung

### Technisches Gebiet

Die Erfindung bezieht sich auf einen Frontlader mit einem Anbaurahmen, der an eine Anbaukonsole eines Schleppers ankuppelbar ist, und mit Steckkupplungen für Verbindungsleitungen zwischen der Anbaukonsole und dem Anbaurahmen.

### Stand der Technik

Zum Anschließen eines Frontladers an einen Schlepper weist dieser zu beiden Seiten Anbaukonsolen für einen Anbaurahmen des Frontladers auf, wobei im allgemeinen jeweils zwei in Kupplungsrichtung mit Abstand hintereinander angeordnete Kupplungszapfen des Anbaurahmens in entsprechende Kupplungsmäuler der Anbaukonsole eingreifen. Während das Ankuppeln des Anbaurahmens an der Anbaukonsole durch ein entsprechendes Verfahren des Schleppers gegenüber dem mit Hilfe von Stützfüßen abgestellten Frontlader automatisiert werden kann, werden die hydraulischen und elektrischen Verbindungsleitungen zur Beaufschlagung und Steuerung des Frontladers und der angebauten Werkzeuge von Hand aus über entsprechende Steckkupplungen an den Frontlader angeschlossen.
Um die Kupplungsstellung zwischen Frontlader und Schlepper zu sichern, ist es bekannt (AT 383 386 B) eine Verriegelungseinrichtung vorzusehen, die aus einem am Anbaurahmen drehbar gelagerten Schwenkriegel besteht, der in der Kupplungsstellung aufgrund einer Federbelastung automatisch vor einen Riegelanschlag geschwenkt wird, der durch eine Ausnehmung in der Anbaukonsole gebildet wird. Zum Lösen dieser Verriegelung ist der Schwenkriegel mit einem Handhebel verbunden, mit dessen Hilfe der Schwenkriegel gegen die Kraft seiner Belastungsfeder unter Freigabe des Riegelanschlages aus der Verriegelungsstellung verschwenkt werden kann. Die Sperrfläche des Schwenkriegels ist dabei in Form einer Nockenfläche ausgebildet, um eine spielfreie Anlage des Schwenkriegels am Riegelanschlag sicherzustellen und eine allenfalls auftretende Lockerung des Kupplungseingriffes auszugleichen. Der Verriegelungseingriff des Schwenkriegels setzt allerdings die Kupplungsendstellung voraus, in der die Kupplungszapfen des Anbaurahmens vollständig in die Kupplungsmäuler der Anbaukonsole eingreifen. Ein selbständiges Zusammenführen der zusammengehörigen Steckkupplungsteile für die Verbindungsleitungen ist nicht vorgesehen und auch wegen der nicht ausreichend genauen Führung des Anbaurahmens gegenüber der Anbaukonsole des Schleppers während des Kupplungsvorganges nicht möglich.

Darüber hinaus ist es bekannt (FR 2 684 120 A1), die Steckkupplungsteile jeweils auf einer gemeinsamen, gegenüber dem Anbaurahmen bzw. der Anbaukonsole über elastische Blöcke abgestützten Trägerplatte anzuordnen, wobei die beiden einander gegenüberliegenden Trägerplatten mit einer in Steckrichtung der Steckkupplungen verschiebbar ineinandergreifenden Führung zu versehen, die aus einem in eine Führungshülse eingreifenden Führungsstift besteht, der zum leichteren Einführen in die Führungshülse mit einem sich verjüngendem Ende ausgebildet ist. Da die zylindrische Führungsfläche des Führungsstifts erst zur Wirkung kommt, wenn die einander paarweise gegenüberliegenden Steckkupplungsteile der beiden Trägerplatten ineinandergreifen, müssen die zum Ausgleich von Winkel- und Fluchtungsfehlern erforderlichen Richtkräfte zu einem nicht unerheblichen Teil über die Steckkupplungsteile aufgenommen werden, was sich entscheidend auf die Lebensdauer dieser Steckkupplungen auswirkt. Außerdem ist für eine zusätzliche genaue Ausrichtung des Anbaurahmens gegenüber der Anbaukonsole zu sorgen, weil ja ein in eine Führungshülse eingreifender Führungsstift keine Winkelausrichtung sicherstellen kann.

### Darstellung der Erfindung

Der Erfindung liegt somit die Aufgabe zugrunde, einen Frontlader der eingangs geschilderten Art so auszugestalten, daß vorteilhafte Voraussetzungen für ein automatisches Kuppeln der Steckkupplungen für die Verbindungsleitungen zwischen der Anbaukonsole und dem Anbaurahmen sichergestellt werden.

Die Erfindung löst die gestellte Aufgabe durch die Merkmale des Anspruchs 1.

Durch die Verbindung der einander paarweise zugeordneten Teile der Steckkupplungen mit Führungen, die in Steckrichtung der Steckkupplungen verschiebbar ineinandergreifen, werden die quer zur Steckrichtung auftretenden Kraftkomponenten über diese Führungen aufgenommen, so daß die Steckkupplungen selbst entlastet werden. Da die Führungslänge der ineinandergreifenden Führungen größer als die Eingriffslänge der Steckkupplungsteile ist, greifen zuerst die einander paarweise zugeordneten Führungen ineinander, bevor die mit diesen Führungen verbundenen Steckkupplungsteile zusammengeführt werden. Dies bedeutet, daß über die Führungen vor dem Kupplungseingriff der Steckkupplungen eine gegenseitige Ausrichtung und Zentrierung der zusammenwirkenden Steckkupplungsteile mit der Wirkung erfolgt, daß der Kupplungseingriff der Steckkupplungsteile ohne unzulässige Belastung dieser Teile und ihrer Dichtungen beim Ankuppeln des Anbaurahmens des Frontladers an der Anbaukonsole des Schleppers selbständig vorgenommen werden kann. Voraussetzung ist allerdings, daß für eine gegenseitige Ausrichtungsmöglichkeit der paarweise zusammenwirkenden Führungen gesorgt wird. Zu diesem Zweck bilden die paarweise zusammenwirkenden Steckkupplungsteile mit den zugehörigen Führungen je eine gegen Federkraft begrenzt verlagerbare Baueinheit, die sich bei den auftretenden, unvermeidbaren Fluchtungs- und Winkelfehlern zu Beginn des Ankuppelvorganges gegenüber den mit dieser Baueinheit zusammenwirkenden Führungen während des Führungseingriffes durch eine Schwenkverstellung bzw. durch eine Querverlagerung ausrichtet.

Eine Ausführungsmöglichkeit besteht darin, zwei oder mehrere Steckkupplungen in einer Baueinheit zusammenzufassen, die dann einen gemeinsamen Träger für die Teile der Steckkupplungen und die zugehörigen Führungen aufweisen muß. Als ineinandergreifende Führungen können in diesem Fall vorteilhaft in Führungsöffnungen eingreifende Führungsstifte vorgesehen werden, wobei dem Träger der Baueinheit entweder die Führungsstifte oder die Führungsöffnungen zugeordnet werden können. Die Zusammenfassung zweier oder mehrerer Steckkupplungen zu einer gemeinsam kuppelbaren Baueinheit bedingt allerdings eine genaue gegenseitige Ausrichtung der Teile dieser zusammengefaßten Steckkupplungen.

Um für die Anordnung der Steckkupplungen größere Fertigungstoleranzen zuzulassen, kann jede Steckkupplung eine für sich verlagerbare Baueinheit für einen Steckkupplungsteil bilden, wobei die den paarweise zusammenwirkenden Teilen der Steckkupplungen zugehörigen Führungen die Steckkupplungsteile umschließen. Mit einer solchen Konstruktion ergibt sich für jede Steckkupplung ein von den anderen Steckkupplungen unabhängiger Toleranzausgleich. Wegen der die paarweise zusammenwirkenden Steckkupplungsteile umschließenden Führungen wird eine platzsparende Anordnung sichergestellt, die den zusätzlichen Vorteil mit sich bringt, daß die Steckkupplungsteile durch die Führungen vor mechanischen Beschädigungen geschützt werden. Dies gilt insbesondere für den Fall, daß die die Steckkupplungsteile umschließenden Führungen aus zu den Steckkupplungsteilen koaxialen Führungshülsen bestehen.

Um den Kupplungsvorgang nicht ausschließlich von der Bewegung des Schleppers gegenüber dem abgestellten Frontlader abhängig zu machen, kann bei Frontladern mit einer einen Schwenkriegel und einen Riegelanschlag umfassenden Verriegelungseinrichtung für die Kupplungsstellung des Anbaurahmens in einfacher Weise vorgesehen werden, daß der in der Anbaukonsole gelagerte, mit einem Schwenkantrieb verbundene Schwenkriegel einen am Riegelanschlag des Anbaurahmens angreifenden Riegelhaken bildet, der auf einander gegenüberliegenden Seiten des Hakenmauls mit Nockenflächen zur Beaufschlagung des Riegelanschlages in und entgegen der Richtung des Kupplungseingriffes versehen ist. Über den Schwenkriegel kann somit der Riegelanschlag und damit der Anbaurahmen bis zum vollständigen Kupplungseingriff zwischen Anbaurahmen und Anbaukonsole in Kupplungsrichtung verstellt werden, was nicht nur die Verbindung zwischen Anbaurahmen und Anbaukonsole, sondern auch der dem Anbaurahmen und der Anbaukonsole zugeordneten Teile der Steckkupplungen zur Folge hat. In ähnlicher Wiese kann die andere Nockenfläche zum Öffnen der Kupplungseingriffe herangezogen werden, wenn der Riegelhaken im Öffnungssinn verschwenkt wird. Zum Aufbringen ausreichender Stellkräfte ist der Schwenkantrieb vom Schlepper her zu beaufschlagen, so daß der Schwenkriegel in der Anbaukonsole gelagert und davon abhängig der Riegelanschlag am Anbaurahmen angeordnet wird.

### Kurze Beschreibung der Zeichnung

In der Zeichnung ist der Erfindungsgegenstand beispielsweise dargestellt. Es zeigen
- Fig. 1: einen erfindungsgemäßen Frontlader ausschnittsweise im Bereich des Anbaurahmens unmittelbar vor dem Kupplungseingriff in einem vereinfachten Längsschnitt,
- Fig. 2: den Frontlader gemäß der Fig. 1 im Kupplungseingriff in einem größeren Maßstab und
- Fig. 3: eine der Fig. 2 entsprechende Darstellung einer Konstruktionsvariante, allerdings vor dem Kupplungseingriff.

### Weg zur Ausführung der Erfindung

Um einen Frontlader an einen Schlepper anschließen zu können, wird die Laderschwinge in üblicher Weise mit einem Anbaurahmen 1 versehen, der an zwei einen Schlepper seitlich umfassenden Rahmenteilen 2 je zwei quer zur Kupplungsrichtung 3 verlaufende Kupplungszapfen 4 mit gegenseitigem Abstand in Kupplungsrichtung 3 trägt. Diese Kupplungszapfen 4 wirken mit in Kupplungsrichtung 3 offenen Kupplungsmäulern 5 einer zu beiden Seiten des Schleppers angeordneten Anbaukonsole 6 zusammen, wenn der Schlepper in Kupplungsrichtung 3 zwischen die Teile 2 des Anbaurahmens 1 des abgestellten Frontladers eingefahren wird. Da nicht davon ausgegangen werden kann, daß nach einem solchen Einfahren des Schleppers zwischen die Seitenteile 2 des Anbaurahmens 1 die Kupplungsendstellung erreicht wird, ist an der Anbaukonsole 6 ein Schwenkriegel 7 in Form eines Riegelhakens 8 drehbar gelagert, der mit Hilfe eines über seine Schwenkachse 9 hinaus verlängerten Schwenkansatzes 10 mit einem auf der Anbaukonsole 6 abgestützten Schwenkantrieb 11, vorzugsweise einem Schwenkzylinder, verbunden ist. Der Riegelhaken 8 bildet an einander gegenüberliegenden Seiten des Hakenmauls Nockenflächen 12 und 13, so daß der Riegelhaken 8 mit seinen Nockenflächen 12, 13 einen Stelltrieb für den einen Riegelanschlag 14 bildenden Kupplungszapfen 5 bildet. Über die Nockenfläche 12 wird beim Schließen des Riegelhakens 8 der Kupplungszapfen 4 auf Anschlag in das Kupplungsmaul 5 gedrückt, womit der Kupplungsvorgang abgeschlossen ist. Beim Öffnen des Riegelhakens 8 kommt die Nockenfläche 13 zum Einsatz, die den Kupplungszapfen 4 aus dem Kupplungsmaul 5 herausdrückt.

Zum Anschluß von Verbindungsleitungen an den Frontlader sind Steckkupplungen 15 vorgesehen, die mit Führungen 18 und 19 versehen sind. Diese Führungen 18 und 19 wirken paarweise zusammen und weisen eine Führungslänge auf, die die Eingriffslänge der Steckkupplungen 15 übersteigt. Dies bedeutet, daß die Führungen 18 und 19 bereits ineinander eingreifen, bevor ein Kupplungseingriff der Steckkupplungen 15 stattfindet, so daß die Steckkupplungen erst geschlossen werden, wenn über die ineinandergreifenden Führungen 18 und 19 die gegenseitige Ausrichtung der Steckkupplungsteile 16 und 17 gewährleistet ist.

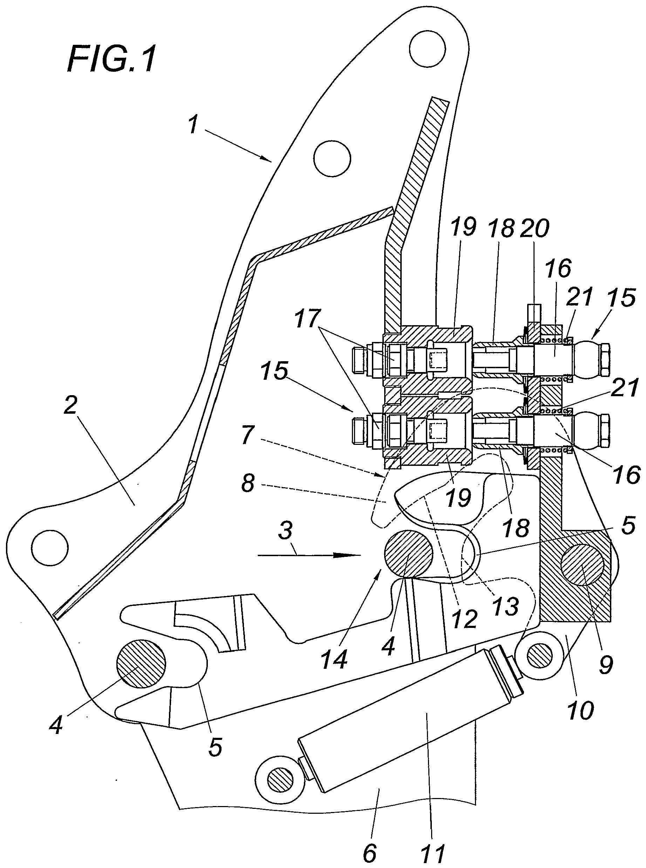

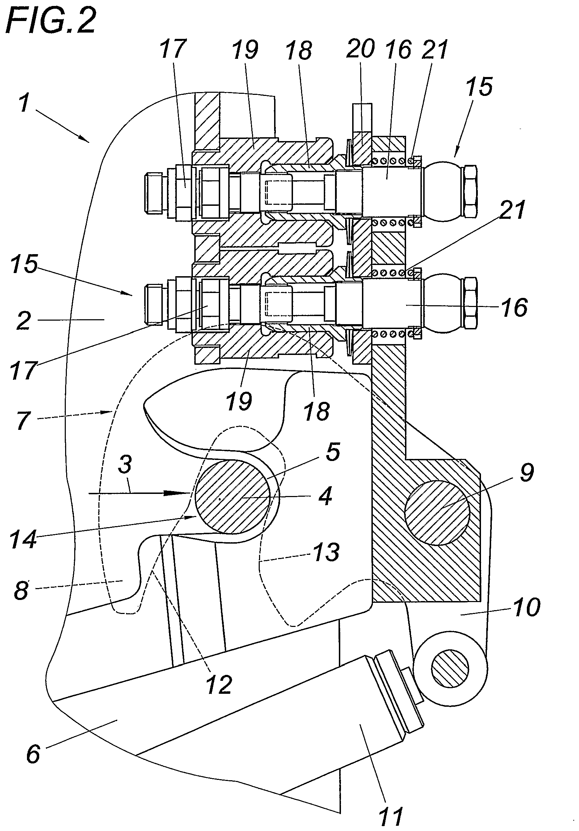

Gemäß den Fig. 1 und 2 bilden die Führungen 18 und 19 die Steckkupplungsteile 16 und 17 umschließende Führungshülsen, die mit den Steckkupplungsteilen 16 und 17 verschraubt sind. Die der Anbaukonsole zugeordneten Steckkupplungen 16 sind mit den zugehörigen Führungshülsen 18 jeweils zu einer mit Spiel in einem Gestell 20 gehaltenen Baueinheit zusammengefaßt, die über eine Rückstellfeder 21 im Gestell 20 zentriert gehalten wird, gegen die Kraft der Rückstellfeder 21 aber verschwenkt und radial verlagert werden kann, um Winkel- bzw. Fluchtungsfehler beim Kuppeln ausgleichen zu können. Wird der Riegelhaken 8 aus der in der Fig. 1 angedeuteten Offenstellung über den Schwenkantrieb 11 geschlossen und der Kupplungszapfen 4 in das Kupplungsmaul 5 eingedrückt, so greifen die Führungshülsen der Führungen 18 und 19 ineinander ein, wobei sich die Führungen 18 der begrenzt beweglichen Steckkupplungsteile 16 gegenüber den starr im Anbaurahmen 2 abgestützten Führungen 19 der Steckkupplungsteile 17 ausrichten, um nach dieser Ausrichtung eine von Querkräften unbelastete Steckverbindung zwischen den Steckkupplungsteilen 16 und 17 herzustellen, wie dies in der Fig. 2 dargestellt ist. Wird der Schwenkantrieb 11 gegensinnig beaufschlagt, so wird über die Nockenfläche 13 des Riegelhakens 8 der Kupplungszapfen 4 aus dem Kupplungsmaul 5 gedrückt, was mit einem Ausziehen der Steckverbindung der Steckkupplungen 15 einhergeht. Zur vollständigen Lösung des Kupplungseingriffes wird die Anbaukonsole 6 des Schleppers aus dem Anbaurahmen 1 gezogen, wobei wiederum über die Führungen 18 und 19 eine Querbelastung der Steckkupplungsteile 16 und 17 unterbunden wird.

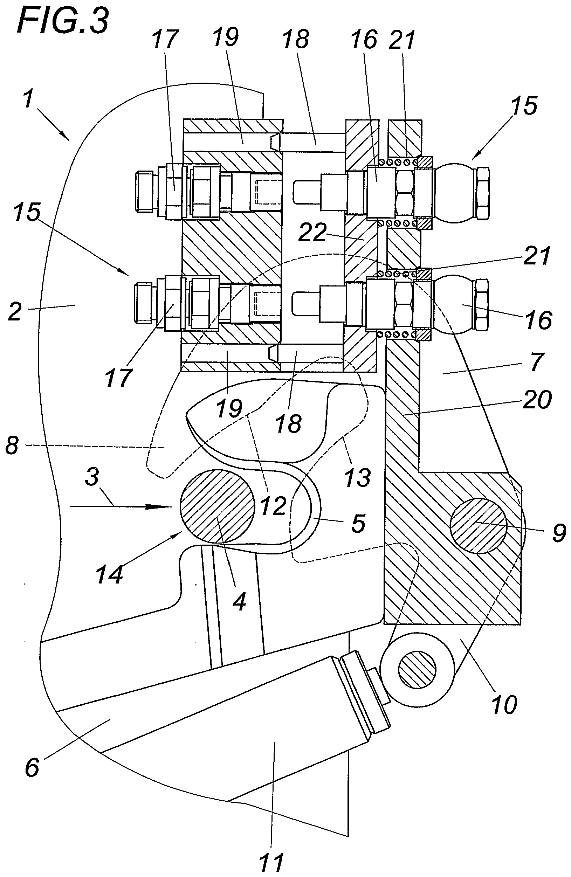

Zum Unterschied zu der Konstruktion nach den Fig. 1 und 2 werden beim Ausführungsbeispiel nach der Fig. 3 wenigstens zwei Steckkupplungen 15 zu einer Baueinheit zusammengefaßt, indem die Steckkupplungsteile 16 in einen gemeinsamen Träger 22 eingeschraubt werden, der mit Führungen 18 in Form von Führungsstiften versehen ist, die in Führungsöffnungen der Führungen 19 der Steckkupplungsteile 17 des Anbaurahmens 1 eingreifen. Da der Träger 22 gegenüber einem Gestell 20 gegen die Rückstellkraft von Federn 21 verlagert werden kann, können wiederum Winkel- und Fluchtungsfehler ausgeglichen werden. Es ergeben sich somit ähnliche Kupplungsbedingungen wie bei der Ausführungsform nach den Fig. 1 und 2. Allerdings sind die Steckkupplungsteile 16 und 17 im Bereich einer verschwenkbaren Baueinheit mit großer Genauigkeit gegenüber den Führungen 18 und 19 auszurichten, um beim Kuppeln der Steckkupplungen 15 deren Querbelastungen zu vermeiden.

Die Erfindung ist selbstverständlich nicht auf die dargestellten Ausführungsbeispiele beschränkt, weil es vor allem darum geht, aufgrund der beweglichen Baueinheiten, die sich durch die mit entsprechenden Führungen 18 versehenen Steckkupplungen 16 ergeben, Querbelastungen der Steckkupplungsteile 16 und 17 während des Kuppelvorganges und im Kupplungseingriff auszuschließen. Aus diesem Grunde kann die Lagerung der beweglichen Baueinheiten unterschiedlich ausfallen, wobei es von der Funktion her unerheblich ist, ob die Steckkupplungsteile 16 der Anbaukonsole 6 oder die Steckkupplungsteile 17 des Anbaurahmens 1 diese gegen Federkraft verlagerbaren Baueinheiten bilden.

## Patentansprüche

1. Frontlader mit einem Anbaurahmen, der an eine Anbaukonsole eines Schleppers ankuppelbar ist, und mit Steckkupplungen für Verbindungsleitungen zwischen der Anbaukonsole und dem Anbaurahmen, wobei die in Kupplungsrichtung (3) des Anbaurahmens (1) ausgerichteten, einerseits dem Anbaurahmen (1) und anderseits der Anbaukonsole (6) zugeordneten Teile (16, 17) der Steckkupplungen (15) für die Verbindungsleitungen zumindest gruppenweise mit Führungen (18, 19) verbunden sind, die einerseits jeweils einen Führungsteil (18) an der Anbaukonsole (6) und einen Führungsteil (19) am Anbaurahmen (1) umfassen, die paarweise zusammenwirken und die in Steckrichtung der Steckkupplungen (15) verschiebbar ineinandergreifen und eine die Eingriffslänge der Steckkupplungsteile (16, 17) übersteigende Führungslänge aufweisen, so daß die einander paarweise zugeordneten Führungen (18, 19) vor den Steckkupplungsteilen (16, 17) ineinandergreifen, und wobei die einen der paarweise zusammenwirkenden Steckkupplungsteile (16, 17) mit den zugehörigen Führungen (18, 19) je eine gegen Federkraft quer zur Steckrichtung begrenzt verlagerbare Baueinheit bilden.

2. Frontlader nach Anspruch 1, **dadurch gekennzeichnet, daß** die quer zur Steckrichtung begrenzt verlagerbare Baueinheit verschwenkbar ist und einen gemeinsamen Träger (22) für die Teile (16) der Steckkupplungen (15) und die zugehörigen Führungen (18) aufweist.

3. Frontlader nach Anspruch 2, **dadurch gekennzeichnet, daß** die verschiebbar ineinandergreifenden Führungen (18, 19) für die Steckkupplungen (15) aus in Führungsöffnungen eingreifenden Führungsstiften bestehen.

4. Frontlader nach Anspruch 1, **dadurch gekennzeichnet, daß** jede Steckkupplung (15) eine für sich verlagerbare Baueinheit für einen Steckkupplungsteil (16) bildet und daß die den paarweise zusammenwirkenden Teilen (16, 17) der Steckkupplungen (15) zugehörigen Führungen (18, 19) die Steckkupplungsteile (16, 17) umschließen.

5. Frontlader nach Anspruch 4, **dadurch gekennzeichnet, daß** die die Steckkupplungsteile (16, 17) umschließenden Führungen (18, 19) aus zu den Steckkupplungsteilen (16, 17) koaxialen Führungshülsen bestehen.

6. Frontlader nach einem der Ansprüche 1 bis 5 mit einer einen Schwenkriegel und einen Riegelanschlag umfassenden Verriegelungseinrichtung für die Kupplungsstellung des Anbaurahmens, **dadurch gekennzeichnet, daß** der in der Anbaukonsole (6) gelagerte, mit einem Schwenkantrieb (11) verbundene Schwenkriegel (7) einen am Riegelanschlag (14) des Anbaurahmens (1) angreifenden Riegelhaken (8) bildet, der auf einander gegenüberliegenden Seiten des Hakenmauls (5) mit Nockenflächen (12, 13) zur Beaufschlagung des Riegelanschlages (14) in und entgegen der Richtung des Kupplungseingriffes (3) versehen ist.

## Claims

1. Front end loader comprising a mounting frame which can be coupled to a mounting bracket of a tractor, and with plug couplings for connecting lines between the mounting bracket and the mounting frame, wherein the parts (16, 17) of the plug couplings (15) for the connecting lines, which parts are oriented in the coupling direction (3) of the mounting frame (1) and are allocated on the one hand to the mounting frame (1) and on the other hand to the mounting bracket (6), are connected at least in groups to guides (18, 19) which each comprise a guide part (18) on the mounting bracket (6) and a guide part (19) on the mounting frame (1) which cooperate in pairs and slidably engage one inside the other in the plugging direction of the plug couplings (15) and have a guide length exceeding the engagement length of the plug coupling parts (16, 17), so that the guides (18, 19) allocated to each other in pairs engage one inside the other in front of the plug coupling parts (16, 17), and wherein the plug coupling parts (16, 17) cooperating with each other in pairs with the associated guides (18, 19) form in each case a structural unit which can be displaced to a limited extent against spring force transverse to the plugging direction.

2. Front end loader as claimed in claim 1, **characterised in that** the structural unit which can be displaced to a limited extent transverse to the plugging direction is pivotable and comprises a common support (22) for the parts (16) of the plug couplings (15) and the associated guides (18).

3. Front end loader as claimed in claim 2, **characterised in that** the guides (18, 19) which can slidably engage one inside the other for the plug couplings (15) consist of guide pins engaging in guide openings.

4. Front end loader as claimed in claim 1, **characterised in that** each plug coupling (15) forms a structural unit, which can be displaced in its own right, for a plug coupling part (16), and **in that** the guides (18, 19) allocated to the parts (16, 17) of the plug couplings (15) cooperating in pairs surround the plug coupling parts (16, 17).

5. Front end loader as claimed in claim 4, **characterised in that** the guides (18, 19) surrounding the plug coupling parts (16, 17) consist of guide sleeves coaxial to the plug coupling parts (16, 17).

6. Front end loader as claimed in any one of claims 1 to 5, having a locking device, comprising a swing bolt and a bolt stop, for the coupling position of the mounting frame, **characterised in that** the swing bolt (7) mounted in the mounting bracket (6) and connected to a swivel drive (11) forms a bolt hook (8) engaging the bolt stop (14) of the mounting frame (1), said hook being provided with cam surfaces (12, 13) on opposite sides of the hook jaw (5) for acting upon the bolt stop (14) in and opposite the direction of the coupling engagement (3).

## Revendications

1. Chargeur frontal avec un cadre d'attelage qui peut être accouplé à une console d'attelage d'un tracteur, et avec des accouplements enfichables pour des lignes de connexion entre la console d'attelage et le cadre d'attelage, les pièces (16, 17), des accouplements enfichables (15) pour les lignes de connexion, orientées dans la direction d'accouplement (3) du cadre d'attelage (1), associées d'un côté au cadre d'attelage (1) et de l'autre, à la console d'attelage (6), étant reliées, au moins par groupes, à des guidages (18, 19), qui comprennent, d'un côté, respectivement, un élément de guidage (18) au niveau de la console d'attelage (6) et un élément de guidage (19) au niveau du cadre d'attelage (1), qui concourent par paire, et qui s'emboîtent les uns dans les autres de façon mobile dans la direction d'enfichage des accouplements enfichables (15) et qui présentent une longueur de guidage supérieure à la longueur de prise des pièces des accouplements enfichables (16, 17), de sorte que les guidages (18, 19), associés ensemble par paire, s'emboitent les uns dans les autres devant les pièces des accouplements enfichables (16, 17) et les pièces des accouplements enfichables (16, 17), coopérant par paire, formant respectivement avec les guidages (18, 19) correspondants une unité modulaire déplaçable de façon limitée à l'encontre d'une force de rappel transversalement à la direction d'enfichage.

2. Chargeur frontal selon la revendication 1, **caractérisé en ce que** l'unité modulaire déplaçable de façon limitée transversalement à la direction d'enfichage peut être pivotée et comporte un support (22) commun pour les pièces (16) des accouplements enfichables(15) et des guidages (18) associés.

3. Chargeur frontal selon la revendication 2, **caractérisé en ce que** les guidages (18, 19) s'emboitant les uns dans les autres de façon mobile pour les accouplements enfichables (15) sont composés de tiges de guidage venant en prise dans des ouvertures de guidage.

4. Chargeur frontal selon la revendication 1, **caractérisé en ce que** chaque accouplement enfichable (15) forme une unité modulaire pouvant se déplacer en elle-même pour une pièce d'éléments enfichables (16) et **en ce que** les pièces (16, 17), concourant par paire, des guidages (18, 19) associés aux accouplements enfichables (15) entourent les pièces des éléments enfichables (16, 17).

5. Chargeur frontal selon la revendication 4, **caractérisé en ce que** les guidages (18, 19) entourant les pièces des accouplements enfichables (16, 17) sont composés de douilles de guidage coaxiales aux pièces des accouplements enfichables (16, 17).

6. Chargeur frontal selon l'une des revendications 1 à 5 avec un dispositif de verrouillage comprenant une butée de verrouillage et un verrou pivotant pour la position d'accouplement du cadre d'attelage, **caractérisé en ce que** le verrou pivotant (7) relié à un entrainement pivotant (11), placé dans la console d'attelage (6), forme un crochet de verrouillage (8) venant en prise au niveau de la butée de verrouillage (14) du cadre d'attelage (1) qui est muni sur les côtés se faisant face du bec du crochet (5) de faces de came (12, 13) pour la sollicitation de la butée de verrouillage (14) dans et à l'encontre de la direction de la prise d'accouplement (3).
